# EUROPEAN PATENT APPLICATION

(11) **EP 4 818 967 A1**
(43) Date of publication of application: **07.10.2026**
(21) Application number: 25382344.7
(22) Date of filing: 04.04.2025
(51) Int. Cl.: G06K 7/10, H04B 7/00

(54) **COUNTING TAGS**

(71) Applicant: Fundacio per a la Universitat Oberta de Catalunya (UOC), 08018 Barcelona (ES)
(72) Inventor: ALFAYOUMI, Sobhi, 08241 Manresa (ES); MELIÀ SEGUÍ, Joan Antoni, 08024 Barcelona (ES); LOPEZ SORIANO, Sergio, 08320 Masnou (ES)
(74) Representative: ZBM Patents - Zea, Barlocci & Markvardsen

(57) **Abstract**

A computer-implemented method for tag counting in an RFID system, where the RFID system comprises at least a reader and one or more tags. In examples the method comprises estimating tag counting based at least on a received number of responses from a ML model. In examples there is provided a Cl method for training a ML model estimating a number of responses or collided responses.

## Description

### TECHNICAL FIELD

The present disclosure relates to methods and systems used for counting tags.

### BACKGROUND

Radio Frequency Identification (RFID) technology plays an important role in tracking and identifying objects across various industries, streamlining operations in inventory management, logistics, manufacturing, healthcare, and more. Traditional RFID readers are designed to scan each tag individually to retrieve its unique identification, ID. In some applications for which the objective is to count objects rather than identifying them one by one, identifying individual tags is unnecessary and inefficient.

The present disclosure solves inefficiencies due to the solutions described.

### SUMMARY

In a first aspect, a computer-implemented method, CI method, for tag counting in a RFID system, where the RFID system comprises at least a reader and one or more tags, the CI method comprising: initiating an inventory round by sending a command comprising a Q parameter, the Q parameter indicative of at least a number of slots available for the one or more tags to respond; iteratively, for 2^Q slots: indicating the presence of a new slot to respond upon receiving one or more tag responses, each response comprising a response number (RN16): estimating a partial number of tags based at least on the one or more tag responses and waiting for a predefined time (T2) from tag response; and, after the 2^Q slots, estimating the number of tags based at least on one or more partial number of tags.

The CI method allows counting tags in an environment comprising an RFID reader or interrogator and one or more tags. The present disclosure may refer to the wording count or counting as comprising any one of: estimate, determine, calculate, compute, enumerate, quantify, tally, reckon, inventory, take inventory, stock-take, catalogue, list, audit, register, record, sum up, assess, measure, approximate, predict, project, determine, ascertain, identify, or deduce.

The solution provides a specialized method which may be implemented by an RFID reader or interrogator configured to count RFID tags without reading individual identities or identifications, IDs, significantly improving speed and efficiency in environments where counting is the objective rather than identification.

State-of-the-art RFID readers may support fast tag counting on top of identifying individual tag ID. There is, however, a growing need for counting fast feature in industries like logistics, retail, and manufacturing. While some state-of-the-art solutions propose faster counting methods, they may require modifications to the RFID tags, which is impractical for widespread commercial use.

The solution of the present disclosure improves fast counting without changing the RFID tags. The solution presented herein remains fully compliant with current RFID specifications, such as EPC^{®} Radio-Frequency Identity Generation-2 UHF RFID Standard, Class 1 Generation 2 (C1G2) specification, or ISO 18000-6-1, even though these standards do not explicitly support tag counting as a core feature. By working within the existing framework, the proposed solution provides a solution to counting without altering the RFID standards. Besides, the proposed solution provides a practical, commercial-ready solution.

The CI method comprises initiating an inventory round by sending a command comprising a Q parameter, the Q parameter indicative of at least a number of slots available for the one or more tags to respond.

An inventory round may be understood, according to the Class 1 Generation 2 (C1G2) specification, as a period initiated by a command sent from a RFID reader, the command being a Query command or a QueryX command, and terminated by either a subsequent Query command, a subsequent QueryX command, a Select command, or a Challenge command.

The Q parameter comprises a parameter that a reader or interrogator uses to regulate the probability of a Tag response. An interrogator instructs tags in an inventory round to load a Q-bit random, or pseudo-random number, into their slot counter; the interrogator may also command tags to decrement their slot counter. Tags may reply when the value in their slot counter is zero. Q may comprise an integer in the range 0 to 15); a corresponding tag-response probability ranges from 2⁰ = 1 to 2⁻¹⁵ = 0.000031. The number of slots available for the tags to respond may be defined as 2^Q slots.

The slot comprises a point in time during an inventory round at which a tag may respond. Slot comprises a value output by a tag's slot counter. Tags are configured to reply when their slot, or the value in their slot counter, is zero.

The CI method comprises, iteratively for each slot, wherein the number of slots is 2^Q, indicating the presence of a new slot to respond. In examples, a Query command initiates an inventory round and sets a first slot for tag responses. When the tags receive such indication, they may respond if the slot number during the inventory round is the one in which the tags are to respond: e.g., if the tag slot counter is zero. Upon receiving one or more tag responses, each response comprising a response number, which may comprise a RN16 value, the CI method proceeds estimating a partial number of tags based at least on the one or more tag responses. The partial number of tags is a number of tags counted in the corresponding slot in a current iteration. The CI method proceeds waiting for a predefined time, referred to as T2 in C1G2, from tag response before proceeding with a new iteration. A new iteration is triggered, and a new slot is made available so that a new partial number of tags is estimated in a new slot. After the 2^Q slots, the CI method proceeds estimating the number of tags based at least on one or more partial number of tags. There may exist the "empty slots", e.g., slots where no tags respond. The empty slots may be caused by the tags not loading a Q-bit random, or pseudo-random number, equalling the number of a current slot. In such cases, no partial number of tags is estimated.

Indicating the presence of a new slot to respond may comprise sending a specific command comprised in C1G2 such as QueryRep. The QueryRep command is used to advance through the remaining slots by decrementing the slot counters of tags, enabling them to respond when their counter reaches zero. Slot progression within an ongoing inventory round is therefore controlled by QueryRep.

By implementing the proposed solution, as a difference with respect to the existing solutions, the reader iteratively sends a new slot command e.g., QueryRep, instead of sending an acknowledgement, e.g., ACK, after T2.

In a further aspect a device is presented herein. The device may be an RFID reader. The device comprises means for carrying out the method of for counting tags in a RFID system presented herein. In examples the device comprises at least a transmission RFID antenna, at least a reception RFID antenna and processing means configured to perform the method of for counting tags in a RFID system presented herein.

In a further aspect, a computer program product is presented herein. The computer program product comprises program instructions for causing a computing system to perform a method presented herein.

The device, method and computer program of the present disclosure specifically outperform in scenarios where speed and category counting are critical. Many industries face situations where the goal is not to identify each object but rather to verify quantities of specific types of objects, detect their presence, or ensure inventory security. Current RFID readers introduce delays by focusing on tag identification, even when only a count is needed. The proposed aspects solve this problem by focusing exclusively on counting tags, leading to substantial time savings.

### BRIEF DESCRIPTION OF THE DRAWINGS

Non-limiting examples of the present disclosure will be described in the following, with reference to the appended drawings, in which:
Figure 1 shows a representation of a counting in RFID system 100.
Figure 2 represents possible variants of commands 104 and received responses 105 over time t.
Figure 3 represents a device 101 sending 301 representation signal of possible responses from tags to a module 302 implementing a computational model.
Figure 4 shows different IQ patterns.
Figure 5 shows an example of a CI method implemented by a device 101 according to the disclosure.
Figure 6 shows an example of a CI method implemented by a device 101 according to the disclosure.
Figure 7 shows three examples with 2 tags selecting, in a) Q=1, in b) Q=2 and in c) Q=3.
Figure 8 shows a representation of the CI method comprising sending the responses to a ML model for analysis.
Figure 9 shows a block diagram of an example computing environment 800.

### DETAILED DESCRIPTION

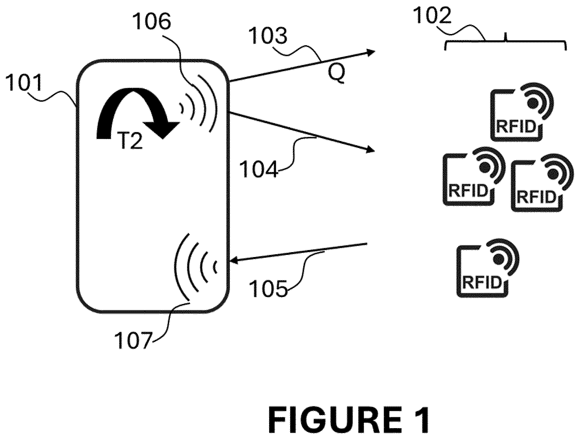

Figure 1 shows a representation of a counting in RFID system 100. The RFID system 100 of figure 1 comprises a device 101 or reader and one or more tags 102. The device 101 is configured to carry out the steps of the computer-implemented method for tag counting. The method for tag counting comprises initiating an inventory round by sending a command 103 comprising a Q parameter. The command 103 may be a Query command or a QueryX command. The Q parameter indicates at least a number of slots available for the one or more tags to respond, where the number of slots is 2^{Q}. The device 101 is configured to iteratively, for 2^Q slots: indicating the presence of a new slot to respond, for example by sending a QueryRep 104 command; further, upon receiving one or more tag responses, each response comprising a response number, for example a 16-bit random or pseudo-random number, referred to as RN16: estimating a partial number of tags based at least on the one or more tag responses and waiting for a predefined time (T2) from tag response before initiating a new iteration. After the iterations, or after the 2^Q slots, the device 101 is configured to estimate the number of tags based at least on one or more partial number of tags.

An example method which may be carried out by the device 101 and the one or more tags 102 may comprise: sending a Query command by the device 101 to initiate an inventory round, where the command includes the parameter with the Q value, which dictates the number of slots available for tags to respond, and modulation settings; then one or more tags 102 receiving the Query command may randomly select a slot number between 0 and 2^Q-1 and preload it into their slot counters.

Then, iteratively, for 2^Q slots, the device 101 may send a QueryRep command; tags then may decrement their respective slot counter with each QueryRep command sent by the device 101; the device 101 may receive one or more tag replies each with an RN16. A RN16 is a 16-bit random number generated by a tag's internal pseudo-random number generator once a tag's counter reaches zero. According to C1G2 the RN16 is sent by tags after a time T1 from the device 101 transmission for an immediate tag reply. The RN16 serves as a temporary identifier and helps the reader or device 101 detect the presence of one or more tags during a slot, while avoiding collisions with other tags which are to respond in different slots; the device 101 may then wait for T2 (time from Tag response to Interrogator transmission) before initiating a new iteration or new slot to respond. At each iteration the device 101 may estimate a partial number of tags based on the responses received. After the iterations, the device 101 may estimate the number of total tags based at least in part on the partial estimations. Figure 1 shows device 101 comprising a transmission antenna 106 for sending commands to one or more tags and a reception antenna 107 to receive tag responses.

The CI method varies the C1G2 protocol by the fact that the identification steps, including sending an Acknowledgment (ACK) containing the RN16 to prompt a tag to reply with its full Electronic Product Code (EPC) data, completing the identification process, are not carried out.

The device 101 or reader does not complete a full identification process. Instead, the CI method implemented by the device 101 or reader focuses on receiving the RN16 responses from the tags during the inventory round without sending an ACK or waiting for the EPC data.

The presented CI method significantly reduces the time and power consumption required for tag counting, as the process only requires the tags to respond with their RN16 once during the inventory round.

In examples, the CI method of the disclosure comprises, sending a representation signal of response(s) to a computational model. The computational model may comprise an Artificial Intelligence (AI) algorithm or a model that maps received collided responses to a number of colliding tags, including rule-based operations, Deep Neural Networks (DNN), Feedforward Neural Networks (FFNN), and Convolutional Neural Networks (CNN). The computational model may comprise statistical models or methods such as Grid-Binning, DBSCAN, Agglomerative Clustering, and K-Means. The computational model is trained or configured to analyze the responses patterns and estimate the number of tag collisions. The computational model is configured to infer a number of response or responses.

In examples, tag responses may collide in one or more of the slots or iterations. In such examples, the CI method of the disclosure comprises, upon detection of at least a collision between more than one tag, sending a representation signal of collided responses to a computational model. The computational model is configured to infer collided responses, wherein a collision comprises receiving more than one tag collided responses at a same slot; receiving a number of collided responses from the ML model; and wherein estimating the partial number of tags based at least on the one or more tag responses comprises estimating the partial number of tags based at least on the received number of collided responses from the ML model. In the CI method of the disclosure, collisions, if they occur, do not hinder the counting process since the detection of the presence of tags is ensured based on the reception and treatment of RN16 responses. By bypassing the final EPC data transmission, the CI method allows completing an inventory round in about half the time compared to standard methods implemented by state-of-the-art RFID readers, while remaining fully compliant with EPCglobal C1G2 standards.

In examples all responses from tags are sent to ML model for analysis, regardless of whether there is a collision, a single tag response, or even an empty slot. The computational model may be responsible for predicting the number of tags within a slot. This approach ensures that the model learns to distinguish between empty slots, successful single-tag responses, and multi-tag collisions, making it more robust in real-world scenarios. In other examples when collisions exist, the CI method comprises sending the collided responses to the computational model..

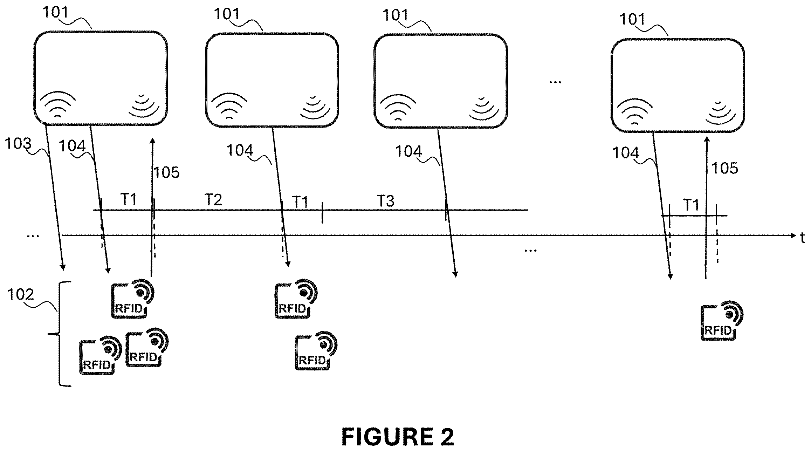

Figure 2 represents possible variants of commands 104 and received responses 105 over time t. In examples of the CI method, the one or more tag responses 105 are received before the lapse of a first time T1 from indication of the presence of the new slot by a command or QueryRep command 104 to tag response. In examples, upon the lapse of the first time T1, no tag response is received, for example by the device 101, and the CI method comprises waiting for a second predefined time T3 from indication of new slot or QueryRep command 104 before starting a new iteration or new slot, when for example the device 101 may send a new QueryRep command 104 after a time equal to T1+T3 to communicate a new slot opportunity for tags to respond. When no response is received may imply that the tags' counters in the RFID system may have not reach zero while decrementing the tag counter.

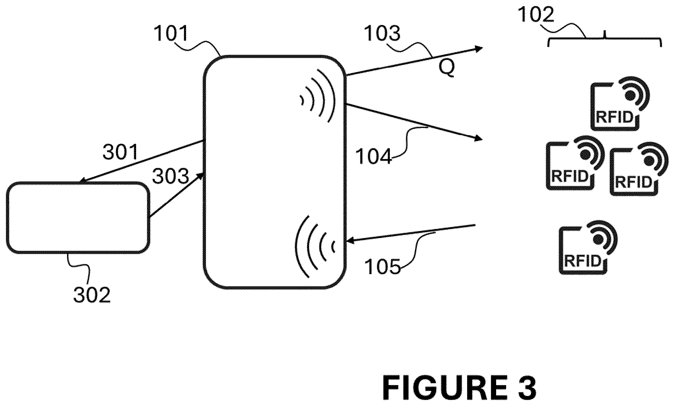

Figure 3 represents the device 101 sending 301 the representation signal of possible responses from tags to a module 302 implementing a ML model. The ML model is trained to infer a number of collided responses based on a representation signal of the received one or more tag responses. The ML module 302 is configured to send 303 the number of collided responses to the device 101. The CI method of the disclosure comprises, in some examples, after receiving one or more tag responses: upon detection of at least a collision between more than one tag (a) sending a representation signal of collided responses to a computational model, for example, machine learning, ML, algorithm or model for inferring a number of collided responses, wherein a collision comprises receiving more than one tag collided responses at a same slot; (b) receiving a number of collided responses from the computational model, e.g., ML model; and wherein estimating the partial number of tags based at least on the one or more tag responses comprises estimating the partial number of tags based at least on the received number of collided responses from the computational model.

In examples the representation signal is based on an In-phase and Quadrature, IQ, samples of the received collided responses. IQ samples or IQ Data may refer to individual signal samples in complex form. Using IQ samples or IQ data may allow making the representation suitable for a fast ML analysis, such as clustering, due the complex, e.g., two-dimensional, nature of the representation. In examples the computational model for inferring the number of collided responses is a computational model which is trained to output a number of collided responses based on any one of IQ data, or features extracted from IQ data samples, or data extracted as a time series from the IQ information. IQ data may refer to raw IQ data points. In examples, Feature Extraction may derive key metrics from the raw IQ data points, and Time-Series Data may treat IQ samples as a sequential signal for temporal analysis. Different models can be used to predict the number of tags using IQ data/samples, regardless of their form: whether as a time series, a constellation plot, or statistical features extracted from the data.

In examples, the computational model is trained to analyse the IQ data patterns the tag responses produce. The patterns reflect how tags respond under different conditions and provide valuable insights into collision behaviour

The CI method comprises therefore estimating the number of tags from the collided RN16 responses by a ML model. In examples the computational model may be fed with one of IQ data, extracting features from IQ samples, or feeding the data as a time series into the model. In examples, as will be illustrated below, one example comprises counting a number of clusters in the IQ data pattern of the received responses to estimate the number of collided responses or colliding tags. In examples the ML model comprises an artificial neural network (ANN) model to predict the number of colliding RFID tags. In examples the computational model is or comprises an Artificial Intelligence, Al, model for example a ML model comprising one or more of Deep Neural Networks (DNN), Feedforward Neural Networks (FFNN), and Convolutional Neural Networks (CNN), or statistical models such as Grid-Binning, DBSCAN, Agglomerative Clustering, and K-Means. The choice of the computational model may depend on specific problem requirements, data complexity, and computational constraints.

An Al model may be trained by a method for training the Al model.

In examples there is presented a computer-implemented method for training an Al model for inferring a number of collided responses.

In examples, the representation signal is based on an In-phase and Quadrature, IQ, information of received collided responses comprising any one of IQ data, or features extracted from IQ data samples, or data extracted as a time series from the IQ information.

Initiating an inventory round by setting the Q parameter to 0, provides only one slot for all tags to respond.

In examples, the predefined maximum number of iterations is the maximum number of slots minus 1.

In examples, the generation of training data, i.e., the generation of the training predefined number of tags and the generation of the training representation signal of the received one or more tag responses for the Q parameter may comprise setting Q = 0, which provides only one slot for a predefined number of tags to respond simultaneously. All tags transmit at the same time, resulting in a fully collided RN16 signal. By repeating this process for different numbers of tags, training data may be generated for various collision scenarios. Although this approach uses Q = 0 during training, the resulting model is not limited to Q = 0 in real scenarios. Instead, the model learns to recognize patterns of partial tag collisions within a slot, making it applicable to any Q value during actual operation. Ultimately, the trained model receives data from each slot separately to predict the number of colliding tags within that slot.

In examples, the generation of training data comprises applying Q > 0, meaning that multiple slots exist. In this case, IQ representation may be mapped, for example computationally or manually, to the number of colliding tags. For example, when Q = 3, there are 8 slots (2³ = 8), and each slot may contain no response, a single tag response, or multiple colliding tags. By analyzing the IQ data points, collision patterns may be identified and labelled. The number of collided tags per slot is validated by ensuring the total number of observed collisions across all slots matches the predefined N tags in the RFID system. This the generation of training data allows building a dataset where each IQ pattern corresponds to a known number of colliding tags, enhancing the model's ability to generalize across different Q values.

The CI method for training may comprise configurations to cause "controlled" collisions. To reliably generate collisions the implementation of the CI method for training creates predictable collision scenarios with N tags transmitting simultaneously, where N may vary for training with different numbers of tags, ranging for example from 0 to 4, to analyse how IQ data patterns change under various numbers of colliding tags also referred to as collision orders.

In examples the number of observed clusters in an IQ plane provides the number of colliding tags in a given slot. Mathematically, an expected number of clusters follows: C=2^N, where C is the number of clusters, and N is the number of colliding tags. A more practical mapping may be used due to signal interference and overlapping clusters, The mapping may be derived from the fundamental principle that each RFID tag has two binary states (0 or 1) during modulation of backscattered signals. When multiple tags respond simultaneously, their binary signals combine multiplicatively, producing a constellation with up to k=2^n clusters, where n is the number of simultaneously transmitting tags and k is the number of clusters. Using this specific mapping explicitly for counting purposes in practical implementations or algorithms provides unforeseen advantages for RFID counting. This method may be reliable for up to 3 colliding tags, as the number of clusters maintains a strong correlation with the number of responding tags. For 4 or more tags, cluster formation becomes more dynamic, leading to slight variations in the observed number of clusters. The mapping comprises:
- 1 observed cluster => 0 estimated tags (empty slot)
- 2 observed clusters => 1 estimated tag (no collision)
- 3 to 4 observed clusters => 2 estimated tags
- 5 to 8 observed clusters => 3 estimated tags
- More than 8 observed clusters => 4 or more estimated tags.

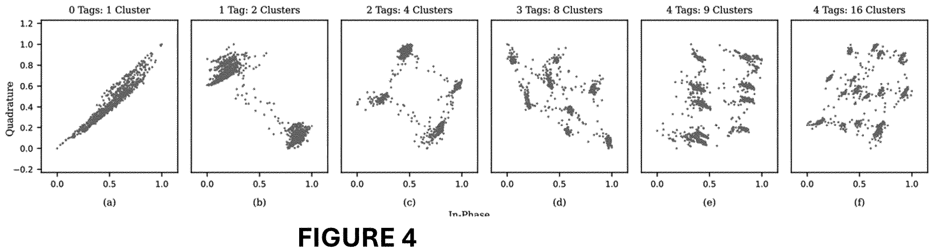

Figure 4 shows different IQ patterns which may be categorized based on a number of clusters in each pattern. Figure 4 shows different types of clusters. A first cluster 401 is referred to as "empty slot" and represents the case when no tag responds. As seen, the IQ data shows a single cluster. In RFID communications there is always a continuous wave being sent by the reader which is modulated to send commands for inventorying tags. After sending the commands the continuous wave remains active so the tags can backscatter or reflect their information. Hence, the signal represented in figure 4 at 401 is the continuous wave.

A second cluster type 402 is referred to as "single tag response" and represents the case when a single tag responds, the IQ data forms two distinct clusters, as shown. The two clusters in 402 represent the binary states of the tag's modulated signal: reflecting the reader's signal back, or high state, 1 or remaining silent, or low state, 0. A third cluster type 403 is referred to as "Multiple Tags Response (Collisions)" and represents the case when multiple tags respond simultaneously, their combined signals create clusters in the IQ plane, as shown. A maximum number of observable clusters may be 2^N, where N is the number of tags responding. For example, if two tags respond, their signals can combine in four possible ways (00, 01, 10,11), resulting in 2²= 4 clusters, as seen in 403. Three tags may generate up to 2³= 8 clusters, as shown in the representation of a fourth cluster type 404. The number of visible clusters may be reduced due to overlapping signals. An overlap may occur when tags transmit the same signal levels, such as when they have identical RN16 values or are positioned at similar distances from the reader, causing their signals to align. Constructive and destructive interferences further impact cluster visibility by either amplifying or cancelling parts of the signal. Additionally, environmental factors such as noise, variations in signal strength, and the sensitivity of the reader can obscure the IQ data patterns, reducing their clarity and the number of distinguishable clusters. For example, figure 4 shows a cluster type 405 comprising "only" 9 clusters for 4 tags, highlighting how the above factors can reduce cluster visibility. In contrast, figure 4 shows at cluster type 406 the theoretical maximum of 2⁴= 16 clusters for 4 tags.

The choice of estimation of colliding tags or collided responses by a ML model may depend on the accuracy and efficiency required by the application. Achieving near 100% accuracy without ML may require a slots-to-tags ratio, STR, greater than 4. While STR greater than 4 may ensure certain accuracy, it comes at the cost of reduced efficiency due to longer tag counting times. In contrast, ML models capable of estimating up to 4 tags in a single collided slot can achieve similar accuracy at an STR as low as 1. Therefore, estimating a number of colliding responses by a ML model maintains high accuracy while significantly improving efficiency by reducing the required STR. Avoiding ML model for estimation of colliding tags simplifies the CI method of the disclosure but requires higher STRs to reduce unresolved collisions, which decreases efficiency. The use of ML model enables systems to resolve more complex collisions, allowing operation at lower STRs while maintaining accuracy and achieving faster tag counting. If the ML model is limited to simpler collision resolutions, higher STRs are still needed, trading off simplicity for reduced efficiency.

In examples, the CI method may be validated using a software defined radio (SDR) platform. Compared to the standardized protocol, the experiments may demonstrate that up to four tags can be counted in the time required to identify a single tag, achieving approximately 77%-time savings across various data rates. The CI method of the disclosure allows therefore a feasible and scalable solution for RFID tag counting, incorporating collision detection and estimation of collided tags per slot to improve counting speed, even in crowded environments

An example RFID system may comprise a functional prototype using the following hardware and software components:
USRP N210/X310: The Universal Software Radio Peripheral (USRP) as the core platform for implementing and testing the RFID protocols. Both N210 and X310 models provide flexibility in software-defined radio (SDR) operations, allowing us to experiment with different RFID protocols and frequency ranges.
RFID Antennas: The setup may include two RFID antennas, one dedicated for transmission (TX) and the other for reception (RX). This configuration ensures optimal communication between the reader and the tags, supporting high-frequency data exchange and real-time counting.
GNU Radio: For software development, GNU Radio is used to build and modify RFID protocols. This open-source software development toolkit allows implementing custom tag counting algorithm efficiently. The algorithm is integrated into the RFID protocol stack within GNU Radio, ensuring compatibility with existing systems and allowing testing and refining the CI method.

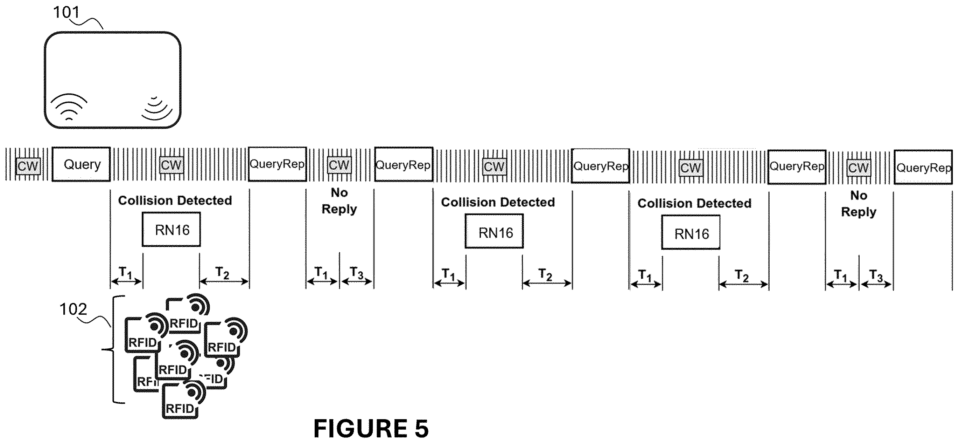

Figure 5 shows an example CI method implemented by a device 101 according to the disclosure. When the goal is simply to count the number of tags 102 in the RFID system or environment, the device 101 reader does not need to complete a full identification process. The CI method comprises, as shown in figure 5, initiating an inventory round (Query), indicating the presence of a new slot to respond, receiving the RN16 responses from the tags 102 within a time period referenced as T1, and, without sending an ACK or waiting for the EPC data, indicating the presence of a new slot to respond (QueryRep) after a period of T2 from the reception of the RN16, and iterating until the number of slots, finishes. If no response is received from tags in one or more iterations, then after T1+T3 from indicating the presence of a new slot to respond (QueryRep), the CI method comprises indicating the presence of a new slot to respond (QueryRep), or in other words, upon the lapse of the first time T1 receiving no tag response, waiting for a second predefined time T3 from indication of new slot before starting a new iteration, which may comprise sending a new QueryRep command after T1+T3 from a previous QueryRep.

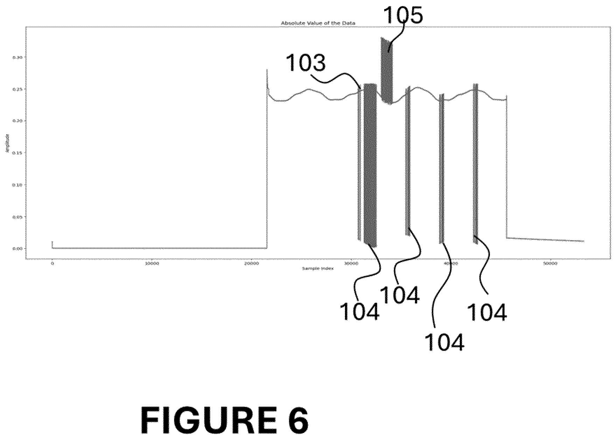

In examples, the CI method of the disclosure comprises developing and testing a code implementation to regulate inventory and retrieve the IDs of RFID tags. The tests may demonstrate a successful integration of the proposed CI methods for tag-counting. The test may demonstrate smooth interaction with the tags, validating the feasibility and effectiveness of the CI methods of the disclosure. Figure 6 shows an example of a CI method implemented by a device 101 according to the disclosure in a case in which the RFID system comprises a single tag (N = 1) and 4 slots are configured when initiating 103 an inventory round (Q = 2, slots=2²) so that the inventory round is divided into four slots. The device 101 reader indicates a new slot 104 and receives 105 one RN16 response from the tag during the inventory round, confirming the presence of a single tag. After T2, the device 101 indicates 104 a new slot, but receives no response since no more tags are present.

Reducing Q to 0, the system immediately detects the tag in one (20=1) slot, as Q = 0. This shows that the system correctly handles both single-tag and low-slot cases, receiving the RN16 without requiring full identification.

In an example of a CI method implemented by a device 101 according to the disclosure in a case in which the RFID system comprises 5 tags (N = 5) and 8 slots are configured (Q = 3), results have been observed comprising that, by increasing the number of tags to N = 5 and setting Q = 3 compared to the case in figure 6, some tags occasionally selected the same slot, causing a collision. Despite the collisions, the reader successfully captures the RN16 values in most slots.

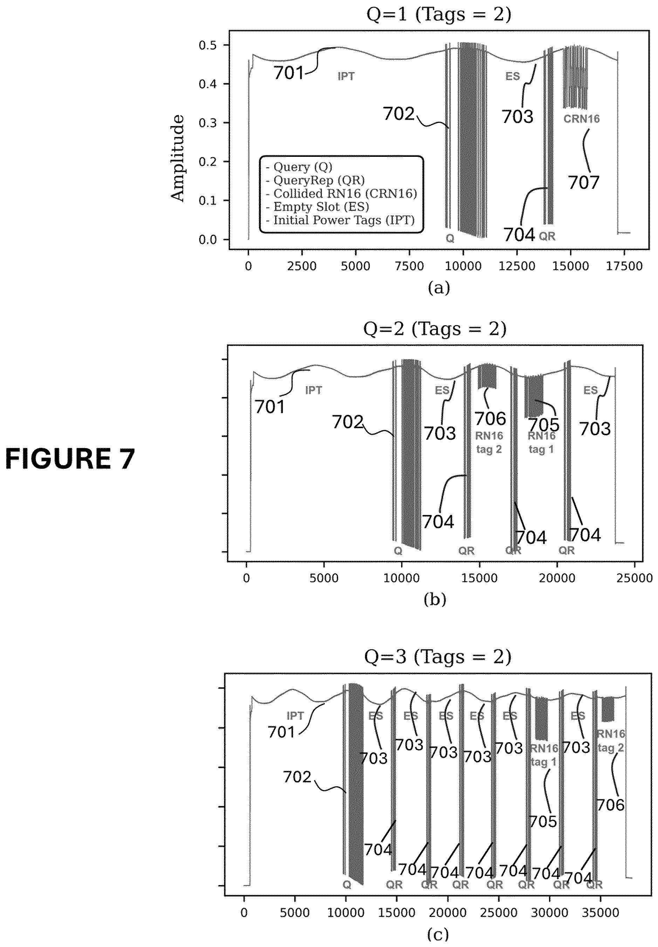

Figure 7 shows three examples with 2 tags selecting, in a) Q=1, in b) Q=2 and in c) Q=3, where Initial Power tags IPT is referenced as 701, Query, Q, command is referenced as 702, Empty Slot ES is referenced as 703, QueryRep QR is referenced as 704, RN16 from tag 1 is referenced as 705, RN16 from tag 2 is referenced as 706 and collided RN16 is referenced as 707. As shown in Fig. 7, for Q = 1 (2 slots, subplot a), both tags selected the same slot, resulting in a collision. The constructive phase of the colliding signals causes the received amplitude to be higher than in other scenarios. For Q = 2 (4 slots, subplot b) and Q = 3 (8 slots, subplot c), each tag selected a unique slot, and no collisions occurred. This demonstrates that increasing the slots-to-tags ratio, STR, which defines the relationship between the number of available slots and the number of tags in the RFID system, reduces collisions effectively. The experiment may be repeated for different configurations with the tags in the same positions to ensure consistency. The results may confirm that variations of configurations do not affect proper interaction with the tags, as the RN16 responses are successfully received in all cases. Overall, the results validate that the algorithm aligns with the EPC C1G2 protocol by maintaining proper communication with the tags despite reader-side updates. The CI method of the disclosure successfully counts tags without requiring ML based collision analysis when the STR is high. When collisions occur, an ML model could estimate the number of tags in collided slots, demonstrating the algorithm's efficiency and compatibility with the protocol.

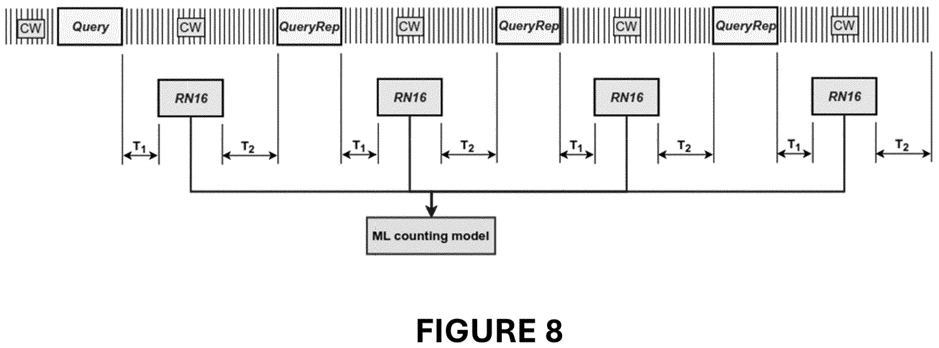

Figure 8 shows a representation of the CI method comprising sending the responses to a ML model for analysis. This approach enables the system to estimate the number of tags responding in the same slot, improving the accuracy of the count even in cases of slot collisions.

These results demonstrate that the proposed CI method performs well in both simple and complex environments, efficiently counting tags in real time without needing to extract individual EPCs. The algorithm proves adaptable, handling different Q values and varying tag densities, with an ability to estimate tag numbers in colliding slots using signal analysis techniques.

Some methods for RFID counting may comprise IQ constellation analysis method or machine learning-based tag estimation method.

The IQ constellation analysis method provides for estimating a number of colliding RFID tags within a slot. The IQ constellation analysis method utilizes the IQ (In-phase and Quadrature) representation of received signals, where the number of clusters in the IQ plane corresponds to the number of colliding tags. This method is widely used due to its efficiency, as it does not require any training data and directly analyzes the received signal properties.

The IQ constellation analysis method follows a structured process to estimate the number of colliding RFID tags using clustering techniques. The steps involved in this method are:
1. signal reception and IQ Representation; when RFID tags respond to a query from the reader, their signals are backscattered and combined at the reader's antenna. These signals are then represented in the IQ (In-phase and Quadrature) plane, which visually captures the combined response of multiple tags. If no tag transmits, the IQ constellation remains empty. If only one tag transmits, the constellation forms two distinct clusters corresponding to the binary states of the tag. If multiple tags transmit simultaneously, their combined signals create multiple clusters, which can be analysed to estimate the number of responding tags.
2. cluster formation and relationship to the number of tags: The number of observed clusters in the IQ plane provides valuable insight into the number of colliding tags in a given slot. Mathematically, a expected number of clusters follows: C=2^N, where C is the number of clusters, and N is the number of colliding tags. However, due to signal interference and overlapping clusters, a more practical mapping may be used. The mapping may be derived from the fundamental principle that each RFID tag has two binary states (0 or 1) during modulation of backscattered signals. When multiple tags respond simultaneously, their binary signals combine multiplicatively, producing a constellation with up to k=2^n clusters, where n is the number of simultaneously transmitting tags and k is the number of clusters. Using this specific mapping explicitly for counting purposes in practical implementations or algorithms provides unforeseen advantages for RFID counting. This method may be reliable for up to 3 colliding tags, as the number of clusters maintains a strong correlation with the number of responding tags. For 4 or more tags, cluster formation becomes more dynamic, leading to slight variations in the observed number of clusters. The mapping comprises:
   - 1 observed cluster => 0 estimated tags (empty slot)
   - 2 observed clusters => 1 estimated tag (no collision)
   - 3 to 4 observed clusters => 2 estimated tags
   - 5 to 8 observed clusters => 3 estimated tags
   - More than 8 observed clusters => 4 or more estimated tags.
3. clustering techniques for IQ analysis: To automate the process of counting clusters and improve accuracy, various clustering algorithms may be applied to the IQ plane data. Using clustering methods, may provide for accurately determining the number of clusters in the IQ plane and map them to the corresponding number of colliding tags:
   - Grid-Binning where the IQ plane is divided into a fixed grid, and the number of occupied grid cells is counted. This provides a computationally efficient way to estimate the number of clusters when the tag density is moderate.
   - DBSCAN (Density-Based Spatial Clustering of Applications with Noise), which identifies densely packed groups of IQ points and separates noise and which is particularly effective when clusters overlap or vary in density.
   - Agglomerative Clustering which iteratively merges the closest clusters until a stopping criterion is met and which is useful for identifying progressively larger groups of responding tags.
   - K-Means Clustering which divides the IQ plane into K clusters, where K is dynamically determined based on the density of observed signals. K-Means Clustering is advantageous when clusters are well-separated and evenly distributed.
4. Impact of Slot-to-Tag Ratio (STR) on Collision Order: The Slot-to-Tag Ratio (STR), which defines the ratio of available slots to the number of responding tags, influences the likelihood of high-order collisions. If STR is greater than 2, meaning there are at least twice as many slots as responding tags, it is highly unlikely to observe more than 4 colliding tags per slot. This is advantageous because it ensures that IQ Constellation Analysis remains highly effective in real-world deployments, where RFID systems are often optimized to keep STR at reasonable levels.

Using IQ Constellation Analysis provides at least the following advantages for estimating RFID tag collisions:
No Training Data Required - IQ Constellation Analysis functions independently of past data and does not require model training or parameter tuning.
Highly Efficient - Unlike machine learning models, which require training and parameter optimization, this approach operates in real-time and is computationally lightweight.
Direct Signal Representation - Instead of relying on indirect measurements like RSSI or phase shifts, IQ Constellation Analysis provides a clear visual representation of colliding tags.
Enhanced by Clustering Techniques - Using Grid-Binning, DBSCAN, Agglomerative Clustering, and K-Means, we can further automate the process of counting clusters and improve tag estimation.
Effective in Real-World Scenarios - Since RFID systems are designed to maintain an STR > 2, most practical deployments do not experience excessive tag collisions, ensuring that this method remains reliable.

The machine learning-based tag estimation method is a highly adaptive and scalable method. Unlike signal-processing-based methods such as IQ Constellation Analysis, ML techniques learn patterns from past data and can generalize across different RFID environments. This adaptability makes ML particularly effective for handling complex collision scenarios where signal overlap, noise, and variations in cluster formation make traditional methods less reliable.

ML-based tag estimation relies on a data-driven approach where models are trained to recognize patterns in the received signals and infer the number of colliding tags. The process involves the following steps:
The first step in ML-based tag estimation is to collect and preprocess the received RFID signals. This can be referred to as data collection and feature extraction. The IQ samples of the RN16 responses serve as the primary input data. There are two main formats in which the IQ samples can be structured: A. Image-Based Representation (IQ Constellation as an Image) In this approach, the IQ constellation plot of the RN16 response is treated as an image. Each received signal is plotted in the IQ plane, forming distinct cluster patterns. The resulting image is then fed into a machine learning model, such as a Convolutional Neural Network (CNN), Vision Transformer, or other deep learning-based image classifiers for classification. These models are particularly effective at recognizing spatial patterns in the IQ samples, allowing for highly accurate tag collision estimation. B. Time-Series Representation (Processing IQ Samples as a Time Series): Instead of converting IQ samples into an image, the raw IQ samples of the RN16 response are processed as a time-series sequence. This approach can leverage sequential models, such as Recurrent Neural Networks (RNNs), Long Short-Term Memory (LSTM) networks, Temporal Convolutional Networks (TCNs), Transformers, or any other time-series processing models, to analyze signal variations over time. These models capture subtle temporal features that are important for distinguishing between different numbers of colliding tags. Once the IQ samples are structured, the ML model can be trained in one of two ways: A. Two-Step Mapping Approach: The ML model is trained to count the number of clusters in the RN16 IQ samples. The counted clusters are then mapped to the number of colliding tags based on the structured relationship we established in IQ Constellation Analysis. This approach ensures consistency with traditional IQ analysis, allowing ML to enhance cluster detection accuracy. Since cluster formation follows known patterns, this method leverages prior knowledge while improving robustness in complex environments. B. Direct Mapping Approach (End-to-End Learning): Instead of counting clusters first, the ML model directly maps the RN16 IQ samples to the number of colliding tags. This is a faster approach as it bypasses intermediate steps and learns a direct nonlinear relationship between raw IQ samples and tag count. Deep learning architectures trained for this approach can effectively distinguish complex overlapping signals, allowing for better classification accuracy. This method is particularly effective for scenarios with more than 4 colliding tags per slot, where traditional methods struggle to maintain accuracy.

Since IQ cluster formation becomes less predictable for high-collision scenarios, an end-to-end ML model can extract deeper nonlinear patterns in the signal, leading to improved classification. CNNs work well for image-based inputs, while RNNs, LSTMs, TCNs, and Transformers excel when using raw IQ sample time-series data. To handle the collisions, IQ data of received responses may be sent to a ML module for analysis, which allows estimating how many tags are present in each slot by analyzing the amplitude and phase of the signals.

Some methods for RFID counting may comprise:
RSSI-Based Estimation: Uses received signal strength (RSSI) to infer the number of colliding tags, but its accuracy is affected by environmental noise and tag distance variations.
Phase-Based Separation: Analyzes phase shifts in the received signals to differentiate colliding tags, effective in controlled environments but sensitive to multipath effects.
Successive Interference Cancellation (SIC): Iteratively removes stronger signals from the collision to decode weaker ones, improving estimation but requiring high computational power.

These methods can be used individually or combined with IQ Constellation analysis or IQ data analysis and ML-based estimation to enhance RFID tag collision resolution.

To handle the collisions, IQ data of received responses may be sent to a ML module for analysis, which allows estimating how many tags are present in each slot by analyzing the amplitude and phase of the signals.

Some applications that may benefit from the solutions of the disclosure may include:
Logistics and Security Verification: In large shipping or distribution centers, there is a need for fast verification of shipments to ensure all items are accounted for. For instance, when a pallet or box passes through a checkpoint, the goal is often to confirm that the expected number of items is present without needing to identify each one individually. This can be crucial for security purposes-to ensure no items are missing from a shipment-or to detect the presence of specific categories of items, such as confirming that all required medical supplies or electronics are present in a shipment. A device 101 or RFID reader configured to implement the method of the disclosure provides an optimized device for fast counting which expedites the process, making security checks faster and more reliable. In examples of the disclosure there is provided a large shipping center or a distribution center comprising a device 101 of the present disclosure.

Retail and Inventory Control with Categorical Focus: In retail and inventory settings, businesses often need to count specific types of products within a mixed batch. For example, a retailer may want to know how many T-shirts and jeans are packed in a box or on a pallet without needing to identify each individual item. By focusing on categorical counting, the proposed Ci metho and device or RFID reader allows to quickly assess quantities for multiple categories (e.g., clothing types) at once, without the overhead of reading each tag's unique ID. This makes stock-taking and replenishment efficient, especially for high-volume retailers who frequently handle mixed product shipments. In examples of the disclosure there is provided a retail and inventory center comprising a device 101 of the present disclosure.

Manufacturing and Production Line Monitoring: In fast-paced production environments, such as in automobile or electronics assembly, there is a need to quickly count the number of parts or components passing through each stage of production. The proposed device 101 or reader enables manufacturers to count parts (e.g., screws, panels, or circuit boards) moving along the assembly line without the need for detailed identification, which is often unnecessary. By accelerating the counting process, the reader can reduce downtime and improve overall production line efficiency. In examples of the disclosure there is provided an automobile assembly center comprising a device 101 of the present disclosure. In examples of the disclosure there is provided an electronics center comprising a device 101 of the present disclosure.

Healthcare and Pharmaceutical Inventory: Hospitals and pharmaceutical storage facilities must quickly count critical supplies, such as medications, surgical instruments, or protective equipment, to ensure that stock levels are maintained. In such settings, categorical counting can be essential-for example, determining how many vials of a specific vaccine are in a storage unit, or how many surgical kits are available in an operating room. Speed is critical in healthcare, and a fast RFID reader designed for counting, not identification, could significantly improve inventory control and response times in emergencies. In examples of the disclosure a hospital or a pharmaceutical storage facilities center is provided comprising a device 101 of the present disclosure.

Mixed Shipments and Supply Chain Management: In the supply chain, particularly for fast-moving consumer goods or apparel, shipments often contain mixed items, such as different types of clothing, electronics, or packaged foods. Being able to quickly count how many items of each type are in a shipment (e.g., how many cartons of milk versus juice in a container) without needing to scan each individual item speeds up the receiving and processing stages in warehouses, leading to better operational flow and reduced delays at distribution centers. In examples of the disclosure a supply chain or a warehouse is provided comprising a device 101 of the present disclosure.

Livestock and Wildlife Management: In large farms or wildlife reserves, quickly counting animals is crucial for managing herds or monitoring populations. Instead of identifying each animal, farmers can use the proposed RFID reader to count animals passing through gates, such as tracking how many cows enter a feeding area. This fast, efficient counting method also benefits wildlife conservation efforts, allowing for population monitoring with minimal disturbance. In examples of the disclosure a large farm or wildlife reserve is provided comprising a device 101 of the present disclosure.

The disclosure provides a unique RFID reader that not only improves overall counting speed but also offers specialized capabilities for categorical counting without the need for time-consuming ID extraction. This is especially relevant in industries where multiple types of items need to be accounted for simultaneously, such as ensuring there are the correct quantities of T-shirts, jeans, and jackets in a shipment while not needing to track the individual identity of each item. By leveraging advanced algorithms for RFID tag population estimation, the proposed system will significantly enhance the speed and accuracy of inventory processes, resulting in time savings and operational improvements across industries.

In examples a training data processing system is provided, comprising a processor configured to carry out the steps of a computer-implemented method of training a ML model.

In examples a computer program product is provided comprising program instructions for causing a computing system to perform a CI method for estimating a number of tags according to the disclosure and a method according for training a ML model according to the disclosure.

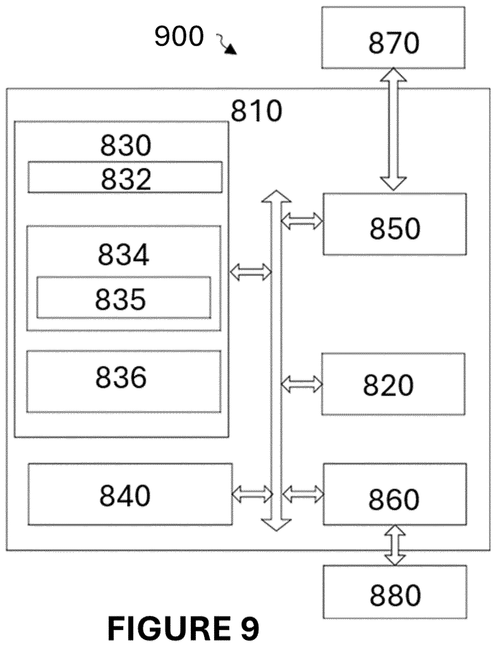

Figure 9 is a block diagram of an example computing environment 900 including a data processing system or computing device 810 configured to implement aspects of computer-implemented methods and computer-executable program instructions or computer program or code according to the present disclosure. For example, the computing device 810, or portions thereof, is configured to execute instructions to initiate, perform, or control one or more operations described with reference to any of the methods of the present disclosure. When the computer program is embodied in a signal that may be conveyed directly by a cable or other device or means, the carrier may be constituted by such cable or other device or means. Alternatively, the carrier may be an integrated circuit in which the computer program is embedded, the integrated circuit being adapted for performing, or for use in the performance of, the relevant methods.

The computing device 810 includes one or more processors 820. The processor(s) 820 are configured to communicate with system memory 830, one or more storage devices 840, one or more input/output interfaces 850, one or more communications interfaces 860, or any combination thereof. The system memory 830 includes volatile memory devices (e.g., random access memory (RAM) devices), nonvolatile memory devices (e.g., read-only memory (ROM) devices, programmable read-only memory, and flash memory), or both. The system memory 830 stores an operating system 832, which can include a basic input/output system for booting the computing device 810 as well as a full operating system to enable the computing device 810 to interact with users, other programs, and other devices. The system memory 830 stores program data 836 (e.g., system data). The system memory 830 includes one or more applications 834 (e.g., sets of instructions) executable by the processor(s) 820. As an example, the one or more applications 834 include instructions executable by the processor(s) 820 to operations described with reference to any of the methods of the present disclosure.

In examples, the system memory 830 includes a non-transitory, computer readable medium storing instructions 835 that, when executed by the processor(s) 820, cause the processor(s) 820 to initiate, perform, or control operations to perform any of the methods of the present disclosure. The operations include any step as described in the various examples of the disclosure.

The one or more storage devices 840 include nonvolatile storage devices, such as magnetic disks, optical disks, or flash memory devices. In a particular example, the storage devices 840 include both removable and non-removable memory devices. The storage devices 840 are configured to store an operating system, images of operating systems, applications (e.g., one or more of the applications 834), and program data (e.g., the program data 836). In examples, the system memory 830, the storage devices 840, or both, include tangible (i.e., non-transitory) computer-readable media. In examples, one or more of the storage devices 840 are external to the computing device 810.

The one or more input/output interfaces 850 enable the computing device 810 to communicate with one or more input/output devices 870 to facilitate user interaction. For example, the one or more input/output interfaces 850 can include a display interface, an input interface, or both. For example, the input/output interface 850 is adapted to receive responses from RFID tags or feedback from the ML module implementing a ML model. In some implementations, the input/output interface 8 70 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces. In some implementations, the input/output device 870 includes one or more user interface devices and displays, including some combination of buttons, keyboards, pointing devices, displays, speakers, microphones, touch screens, and other devices.

The processor(s) 820 are configured to communicate with devices or controllers 880 via the one or more communications interfaces 860. For example, the one or more communications interfaces 860 can include a network interface. The devices or controllers 880 can include, for example, devices that measure data associated with responses from RFID tags or associated with feedback from the ML module implementing a ML model , network devices, client devices, servers, cloud-based devices, one or more other devices, or any combination thereof.

In some implementations, a non-transitory, computer readable medium stores instructions that, when executed by one or more processors, cause the one or more processors to initiate, perform, or control operations to perform part or all of the functionality described above. For example, the instructions can be executable to implement one or more of the operations or methods of the disclosure. In some implementations, part or all of one or more of the operations or methods of the disclosure can be implemented by one or more processors (e.g., one or more central processing units (CPUs), one or more graphics processing units (GPUs), one or more digital signal processors (DSPs), one or more field-programmable gate arrays (FPGAs), or one or more application-specific integrated circuits (ASICs)) executing instructions, by dedicated hardware circuitry, or any combination thereof.

## Claims

1. A computer-implemented method for tag counting in a RFID system, where the RFID system comprises at least a reader and one or more tags, the computer-implemented method comprising:
- initiating an inventory round by sending a command comprising a Q parameter, the Q parameter indicative of at least a number of slots available for the one or more tags to respond;
- iteratively, for 2^Q slots:
- indicating a new slot to respond;
- upon receiving one or more tag responses, each response comprising a response number (RN16):
- estimating a partial number of tags based at least on the one or more tag responses;
- and waiting for a predefined time (T2) from tag response;
- and, after 2^Q slots, estimating the number of tags based at least on one or more partial number of tags.

2. The computer-implemented method of claim 1 comprising, after receiving one or more tag responses:
- sending a representation signal of one or more responses to a computational model for inferring a number of responses;
- receiving a number of responses from the computational model;
- and wherein estimating the partial number of tags based at least on the one or more tag responses comprises estimating the partial number of tags based at least on the received number of responses from the computational model.

3. The computer-implemented method of claim 1 comprising, after receiving one or more tag responses:
- upon detection of at least a collision between more than one tag,
- sending a representation signal of collided responses to a computational model for inferring a number of collided responses, wherein a collision comprises receiving more than one tag collided responses at a same slot;
- receiving a number of collided responses from the computational model;
- and wherein estimating the partial number of tags based at least on the one or more tag responses comprises estimating the partial number of tags based at least on the received number of collided responses from the computational model.

4. The computer-implemented method of any one of claims 1 to 3 wherein the one or more tag responses are received before lapse of a first time (T1) from indication of the new slot to tag response.

5. The computer-implemented method of claim 4 wherein, upon the lapse of the first time (T1) receiving no tag response, waiting for a second predefined time (T3) from indication of new slot before starting a new iteration.

6. The computer-implemented method of any one of claims 1 to 5 wherein the representation signal is based on an In-phase and Quadrature, IQ, samples of the received responses or collided responses.

7. The computer-implemented method of claim 6 wherein the computational model for inferring the number of responses or collided responses is an artificial intelligence model which is trained to output a number of responses or collided responses in response to any one of:
- IQ data, or
- features extracted from IQ data data, or
- data extracted as a time series from the IQ data.

8. The computer-implemented method of any one of claims 1 to 7 wherein the computational model comprises at least one of the following computational models: Deep Neural Networks (DNN), Feedforward Neural Networks (FFNN), Convolutional Neural Networks (CNN), statistical models such as Grid-Binning, DBSCAN, Agglomerative Clustering, K-Means.

9. A computer-implemented method for training a computational model for inferring a number of responses or collided responses according to any one of claims 2 to 8, the method for training comprising:,
iteratively, for a predefined maximum number of times:
- initiating an inventory round by sending a command comprising a Q parameter, the Q parameter starting with a value equal to 0 in the first time, the Q parameter indicative of at least a number of slots available for the one or more tags to respond;
- iteratively, for 2^Q slots:
- indicating a new slot to respond;
- upon receiving one or more tag responses, each response comprising a response number (RN16), sending to the computational model:
▪ a training predefined number of tags and
▪ a training representation signal of the received one or more tag responses for the Q parameter;
- and incrementing the Q parameter by 1 until the predefined maximum number of times.

10. The computer-implemented method of training the computational model of claim 9 wherein the representation signal is based on an In-phase and Quadrature, IQ, information of the received responses or collided responses comprising any one of:
- IQ data, or
- features extracted from IQ data samples, or
- data extracted as a time series from the IQ data.

11. The computer-implemented method of training of claim 9 or 10 further comprising generating training data, the training data comprising:
- training predefined number of tags and
- training representation signal of received one or more tag responses for a Q parameter,
- wherein generating training data comprises iterating, for different numbers of tags, setting Q equal to 0 and receiving a collided RN16 signal.

12. A device comprising one or more processors for carrying out the method of any one of claims 1 to 8 for counting tags in a RFID system.

13. The device of claim 12 comprising
- at least a transmission RFID antenna;
- at least a reception RFID antenna; and
- one or more processors configured to perform the method of any one of claims 1 to 8.

14. A training data processing system comprising a processor configured to carry out the steps of a computer-implemented method of training a deep learning model according to any one of claims 9 to 11.

15. A computer program product comprising program instructions for causing a computing system to perform a computer-implemented method according to any one of claims 1 to 8 or a computer-implemented method according to any one of claims 9 to 11.
